# EUROPÄISCHE PATENTSCHRIFT

(11) **EP 4 637 486 B1**
(45) Veröffentlichungstag und Bekanntmachung des Hinweises auf die Patenterteilung: **28.10.2026**
(21) Anmeldenummer: 23834066.5
(22) Anmeldetag: 18.12.2023
(51) Int. Cl.: A47J 31/36, A47J 31/42, A47J 42/16, A47J 42/46, H02K 1/00

(54) **KAFFEEMASCHINE MIT GETRIEBELOSEM ANTRIEB**
COFFEE MACHINE WITH GEARLESS DRIVE
MACHINE À CAFÉ À ENTRAÎNEMENT SANS ENGRENAGE

(30) Priorität: 23.12.2022 DE 102022214361
(43) Veröffentlichungstag der Anmeldung: 29.10.2025
(73) Patentinhaber: BSH Hausgeräte GmbH, 81739 München (DE)
(72) Erfinder: FISCH, Markus, 84326 Falkenberg (DE); EDER, Florian, 83132 Pittenhart (DE)
(86) Internationale Anmeldenummer: PCT/EP2023/086361
(87) Internationale Veröffentlichungsnummer: WO 2024/133085

(56) Entgegenhaltungen:
- EP-A1- 2 286 699
- EP-A1- 3 167 776
- EP-B1- 2 654 526
- DE-A1- 102015 201 110
- ANONYMOUS: "Transversalflussmaschine - Wikipedia", 4 May 2022 (2022-05-04), pages 1 - 2, XP093132961, Retrieved from the Internet <URL:https://de.wikipedia.org/w/index.php?title=Transversalflussmaschine&oldid=222607047> [retrieved on 20240220]
- GLOOR ROLF: "Transversalflussmaschine", 12 December 2010 (2010-12-12), pages 1 - 5, XP093132962, Retrieved from the Internet <URL:https://energie.ch/transversalflussmaschine/> [retrieved on 20240220]

## Beschreibung

Die Erfindung betrifft eine Kaffeemaschine, insbesondere für Haushaltszwecke, mit einer motorisch angetriebenen Mahleinheit und/oder einer motorisch angetriebenen Brüheinheit und mit einem Elektromotor als Antrieb zumindest einer der beiden Einheiten, also der Mahleinheit und/oder der Brüheinheit.

Kaffeemaschinen sind z.B. aus der EP 3 167 776 A1 bekannt.

Die Mahleinheit und die Brüheinheit eines Kaffeevollautomaten werden häufig über einen permanent erregten Gleichstrommotor und ein zwischengeschaltetes Getriebe angetrieben. Eine Lichtschranke auf der Motorwelle dient der Positionsbestimmung deren angetriebenen Einheiten, insbesondere die Stellung der Brüheinheit.

Die Aufgabe der Erfindung ist es, den Aufbau des Antriebs eines Kaffeevollautomaten zu vereinfachen.

Diese Aufgabe wird bei der eingangs genannten Kaffeemaschine erfindungsgemäß dadurch gelöst, dass als Elektromotor zum Antrieb zumindest einer der beiden Einheiten eine Transversalflussmaschine (TFM) dient. Im Gegensatz zu herkömmlichen Maschinen mit Durchmesserwicklung verfügt die Transversalflussmaschine über eine Umfangswicklung, die konzentrisch zur Welle der Maschine angeordnet ist. Der magnetische Fluss verläuft folglich transversal bzw. senkrecht zur Drehebene des Rotors. Die Transversalflussmaschine ermöglicht damit eine Entkopplung des magnetischen Kreises vom elektrischen Kreis, sodass sich beide unabhängig voneinander dimensionieren lassen. Der Einsatz einer Transversalflussmaschine als Antrieb der Mahleinheit und/oder der Brüheinheit bietet schon daher eine größere Konstruktionsfreiheit, die besser auf das begrenzte Platzangebot in der Kaffeemaschine reagieren lässt.

Durch den Entfall von Wickelköpfen, die nicht zur Momenterzeugung des Motors beitragen, lässt sich eine feinere Poleinteilung erreichen. Die feinere Polteilung erlaubt eine geringe Drehzahl unter zugleich hohem Drehmoment. Dadurch kann das bisher häufig erforderliche Untersetzungsgetriebe wegfallen. Mit dem Wegfall des Getriebes gewinnt der Antrieb an räumlicher Kompaktheit, beansprucht also weniger Bauraum. Des Weiteren bietet der erfindungsgemäße getriebelose Direktantrieb auch die Möglichkeit, ein gewünschtes Drehmoment zu halten, ohne ein Kriechen in einem Getriebe oder Lageschäden hervorzurufen. Durch den Wegfall des Getriebes und dessen Wirkungsgrad (inkl. hoher Schwankung bei Kunststoffgetrieben) lassen sich Kräfte z. B. in der Brüheinheit genauer messen, so etwa eine Verpresskraft der Brüheinheit über den Motorstrom. Außerdem umfasst der erfindungsgemäße Antrieb weniger Bauteile, womit auch eine geringere Fehleranfälligkeit einhergeht. Der erfindungsgemäße getriebelose Antrieb ist dadurch außerdem verschleißarm, geräuscharm und bietet eine hohe Lebendsauerstabilität.

Transversalflussmaschinen sind häufig als permanenterregte Synchronmaschinen in einphasiger oder mehrphasiger Bauweise ausgebildet. Grundsätzlich ist auch eine Ausführung als Asynchronmaschine denkbar. Nach einer vorteilhaften Ausgestaltung der Erfindung verfügt die erfindungsgemäße Transversalflussmaschine über ein stromgespeistes Erregersystem. Der Rotor der Transversalflussmaschine wird nicht mit Permanentmagneten bestückt, die für ein Magnetfeld sorgen, sondern das Magnetfeld wird durch eine Spule auf dem Rotor erzeugt. Das regelmäßig mit Gleichstrom betriebene Erregersystem erübrigt damit den Einsatz von Permanentmagneten.

Nach einer weiteren vorteilhaften Ausgestaltung der Erfindung kann als Elektromotor eine Transversalfluss-Reluktanzmaschine (TFRM) dienen. Die TransversalflussReluktanzmaschine erfordert mindestens drei Phasen, die - wie auch bei anderen Maschinen - abwechselnd bestromt werden, um ein definiertes Drehmoment zu erzeugen.

Nach einer weiteren vorteilhaften Ausgestaltung der Erfindung kann die erfindungsgemäße TFM oder TRFM als Synchronmaschine ausgebildet sein. Weil der mit dem durch die Netzfrequenz vorgegebenen Drehfeld synchron betriebene Motor elektrisch kommutiert wird und die Elektronik zur Steuerung bzw. Regelung des Motors die Umdrehungszahl exakt kennt, können sonst erforderliche Drehzahlmesser entfallen. Dadurch vereinfacht sich der Aufbau des Antriebs, was ihn in der Beschaffung seiner Bestandteile und in der Montage kostengünstiger macht.

Nach einer alternativen Ausgestaltung der Erfindung kann die erfindungsgemäße TFM oder TRFM als Asynchronmaschine ausgebildet sein. Eine ggf. erforderliche Drehzahlmessung kann dann bei Motoransteuerung berücksichtigt werden. Als Sensoren können beispielsweise Hall-Sensoren verwendet werden, zumindest bei bürstenlosen Gleichstrommotoren, i. Ü. aber auch Inkrementalgeber bzw. Lichtschranken.

Erfindungsgemäß kann im Betrieb der Kaffeemaschine eine TFM oder eine TRFM die Mahleinheit und/oder eine TFM oder eine TRFM die Brüheinheit antreiben. Dadurch kann der Benutzer nicht nur eine insgesamt kompaktere Kaffeemaschine erwarten. Auch ohne aufwändige Geräuschdämmmaßnahmen bietet der erfindungsgemäße Anrieb dem Benutzer dann ein Betriebsgeräusch der Kaffeemaschine auf einem angenehmen und nicht störenden Niveau.

Kaffeemaschinen mit einem Mahlwerk verfügen über eine erste, feststehende Mahlscheibe und über eine zweite, angetriebene Mahlscheibe. Nach einer weiteren vorteilhaften Ausgestaltung kann bei einem erfindungsgemäßen Einsatz einer TFM oder TFRM deren Rotor vorteilhaft an der angetriebenen Mahlscheibe drehfest angebracht oder ihr zumindest drehfest zugeordnet sein. Der mit dem Rotor korrespondierende Stator der TFM oder TFRM kann vorteilhaft an einem Gehäuse des Mahlwerks drehfest gehalten sein oder einen Teil des Gehäuses selbst bilden. Der Rotor kann beispielsweise umfangsseitig an der zweiten Mahlscheibe befestigt sein und der Stator kann als Bestandteil eines innenzylindrischen Gehäuses dienen, das insbesondere beide Mahlscheiben umgibt. Durch die Anordnung der zweiten Mahlscheibe am Rotor und durch den Stator, der das Mahlwerk beispielsweise umfangsseitig umschließt, ergibt sich eine sehr kompakte Bauweise. Alternativ kann der Rotor statt auf dem Umfang auf der Stirnfläche der angetriebenen Mahlscheibe und der Stator entsprechend stirnseitig im Gehäuse angeordnet sein. Dadurch lässt sich der Radius des Mahlwerks vorteilhaft verringern, auch wenn sich dessen axiale Höhe ggf. erhöht. Damit bieten sich konstruktive Varianten an, die je nach Platzangebot gewählt werden können.

Ein Antrieb mittels TFM oder TFRM lässt sich auch vorteilhaft in Kaffeemaschinen einsetzten, die über eine Spindelbrüheinheit mit einer motorisch angetriebenen Spindel verfügen. Nach einer weiteren vorteilhaften Ausgestaltung der Erfindung kann der Rotor einer TFM oder TFRM drehfest an der Spindel und der mit dem Rotor korrespondierende zylindrische Stator der TFM oder TFRM an einem Gehäuse der Spindelbrüheinheit angeordnet bzw. jeweils zugeordnet sein. Naheliegender Weise kann der Rotor an einem Außenumfang der Spindel und der Stator in einen korrespondierenden Bereich des Gehäuses außerhalb des Rotors, insbesondere in einer gehäuseseitigen Lagerung der Spindel angeordnet sein. Der Rotor kann aber auch an einem Innenumfang der Spindel und damit an deren Innenseite angebracht sein. Dadurch kann der Innenraum der Spindel ausgenutzt und der Antrieb der Spindelbrüheinheit ggf. kompakter aufgebaut sein.

Nach einer dazu alternativen Ausgestaltung der Erfindung kann die TFM oder TFRM nach dem Prinzip eines Außenläufermotors konstruiert sein, wonach der Rotor drehfest umfangsseitig an der Spindel und der mit dem Rotor korrespondierende Stator gehäusefest innerhalb des Rotors und innerhalb der Spindel angeordnet sein kann. Der Rotor kann dazu entweder an einem Außenumfang der Spindel oder an ihrem Innenumfang angebracht sein. Damit bietet der Einsatz der TFM oder TFRM eine Vielzahl an Konstruktionsmöglichkeiten, mit der auf einen jeweiligen Platzbedarf oder andere konstruktive Randbedingungen reagiert werden kann. Sie bietet damit jedenfalls eine große konstruktive Wahl- und Gestaltungsfreiheit.

Nach einer weiteren vorteilhaften Ausgestaltung der Erfindung kann die TFM oder TFRM als eine Kupplung in der Spindelbrüheinheit und/oder im Mahlwerk dienen. Die Kupplung kann dafür sorgen, dass die jeweils angetriebene Einheit oder Bestandteilte davon zu Reinigungs- oder Reparaturzwecken leicht, beispielsweise werkzeuglos entnommen werden kann. Beispielsweise kann das Mahlwerk derart aufgebaut sein, dass der Rotor und zumindest die angetriebene Mahlscheiben entnommen werden können. Entsprechend kann die mit dem Rotor ausgestattete Spindel ihrer mit dem Stator kombinierten Lagerung entnehmbar sein. Anstelle einer separaten mechanischen Kupplung kann also das Entnehmen des Rotors aus dem Stators der TFM oder TFRM eine Entkopplung von Bestandteilen des Mahlwerks bzw. der Spindelbrüheinheit ermöglichen.

Das Prinzip der Erfindung wird im Folgenden anhand einer Zeichnung beispielshalber noch näher erläutert. In der stark schematisierten Zeichnung zeigen:
- Figur 1:: einen Axialschnitt durch eine erfindungsgemäße Mahleinheit,
- Figur 2:: eine Teilschnittansicht eines Motors gemäß Figur 1,
- Figur 3:: den Antrieb einer Brüheinheit nach Stand der Technik,
- Figur 4:: einen erfindungsgemäßen Antrieb einer Brüheinheit.

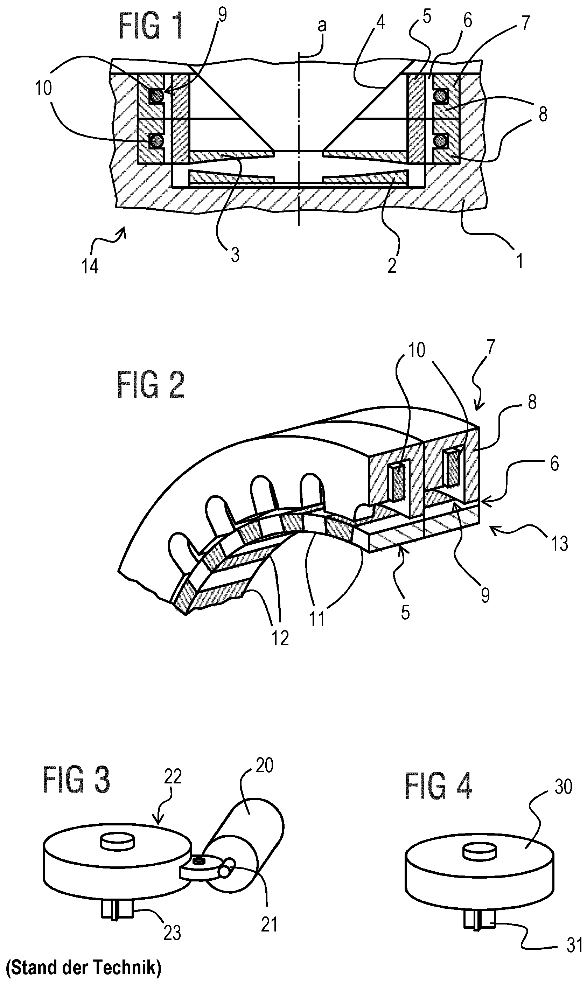

Figur 1 zeigt einen Axialschnitt durch eine erfindungsgemäße Mahleinheit 14. In einem Gehäuse 1 sind zwei Mahlscheiben 2, 3 koaxial zueinander angeordnet. Die Mahlscheibe 2 steht fest gegenüber dem Gehäuse 1, die Mahlscheibe 3 lässt sich um die Drehachse a rotieren. Über einen axial angeordneten Trichter 4 gelangen Kaffeebohnen zwischen die Mahlscheiben 2, 3.

Am Umfang der drehbaren Mahlscheibe 3 ist ein Rotor 5 drehfest befestigt, so dass er bei einer Drehung der Mahlscheibe 3 mit ihr um die Drehachse a mit dreht.

Getrennt durch einen Luftspalt 6 umgibt die drehbare Mahlscheibe 3 und den Rotor 5 ein Stator 7. Er ist - wie die Mahlscheibe 2 - im Gehäuse 1 des Mahlwerks drehfest verankert. Auch der Stator 7 ist als Rotationskörper ausgebildet, dessen Achse mit der Drehachse a zusammenfällt. Er umfasst zwei ringförmige, im Querschnitt U-förmige Eisenkerne 8, die mit ihrer Öffnung 9 zwischen den beiden U-Schenkeln einwärts gerichtet sind. Die Eisenkerne 8 nehmen in ihrer Öffnung 9 jeweils eine Umfangswicklung 10 auf, die folglich ebenfalls ringförmig und mit der Drehachse a als Mittelpunkt ausgebildet ist.

Auch wenn Figuren 1, 2 beispielhaft einen Motor 13 (Figur 2) mit einem Stator 7 mit jeweils zwei Umfangswicklungen 10 zeigen, so sind regelmäßig drei oder mehr Umfangswicklungen 10 und ein Rotor 5 in der entsprechenden axialen Breite vorgesehen. Figur 2 lässt außerdem erkennen, dass sich der Rotor 5 in seiner Umfangsrichtung abwechselnd aus Isolatoren 11 und Eisenkernen 12 zusammensetzt.

Die ausschnittsweise dargestellte Mahleinheit 14 enthält also bereits alle Komponenten für den Antrieb der Mahlscheiben 2, 3 innerhalb ihres Gehäuses 1. Im Betrieb der Kaffeemaschine versetzt der bestromte Stator 8 den Rotor 5 in eine Drehbewegung, die er auf die mit ihm drehfest gekoppelte Mahlscheibe 3 überträgt. Zwischen ihr und der gehäusefest montierten Mahlscheibe 2 können dann Kaffeebohnen vermahlen werden, die über den Trichter 4 in die Mahleinheit 14 gelangen. Die erfindungsgemäß ausgestattete Mahleinheit 14 ist durch den Entfall eines Getriebes und eines extern angebrachten Motors vorteilhaft kompakt ausgebildet, womit die Mahleinheit 14 wenig Bauraum innerhalb einer Kaffeemaschine beansprucht, robust, geräusch- und verschleißarm ist und einen geringen Teile- und Montagebedarf erfordert.

Figur 3 gibt eine prinzipielle Anordnung eines Antriebs einer Spindelbrühleinheit nach dem Stand der Technik wieder: ein hochdrehender und permanenterregter Gleichstrommotor 20 mit einer ausgangsseitig angeordneten Getriebeschnecke 21 ist über ein Getriebe 22 stark untersetzt mit einer Getriebewelle 23 einer Spindelbrühleinheit gekoppelt.

Figur 4 zeigt dagegen schematisch einen erfindungsgemäß getriebelosen Direktantrieb einer Spindelbrühleinheit: eine Transversalflussmaschine (TFM) oder eine Transversalfluss-Reluktanzmaschine (TFRM) als Elektromotor 30 treibt ohne Zwischenschaltung eines Getriebes unmittelbar oder über eine nicht dargestellte Kupplung eine Getriebewelle 31 einer Spindelbrühleinheit an. Schon die stark vereinfachten Darstellungen der Figuren 3, 4 zeigen einen erheblichen Platzvorteil der Erfindung durch den Entfall des Getriebes

Da es sich bei den vorhergehenden, detailliert beschriebenen Antrieben um Ausführungsbeispiele handelt, können sie in üblicher Weise vom Fachmann in einem weiten Umfang modifiziert werden, ohne den Bereich der Erfindung zu verlassen. Insbesondere können auch die konkreten Ausgestaltungen der Rotoren und Statoren in anderer Form als in der hier beschriebenen erfolgen. Ebenso kann der Anbringungsort der Rotoren und Statoren einer anderen Form ausgestaltet werden, wenn dies aus Platzgründen bzw. gestalterischen Gründen notwendig ist. Weiterhin schließt die Verwendung der unbestimmten Artikel "ein" bzw. "eine" nicht aus, dass die betreffenden Merkmale auch mehrmals oder mehrfach vorhanden sein können.

### Bezugszeichenliste

- 1: Gehäuse
- 2: feststehende Mahlscheibe
- 3: drehbare Mahlscheibe
- 4: Trichter
- 5: Rotor
- 6: Luftspalt
- 7: Stator
- 8: Eisenkern
- 9: Öffnung
- 10: Wicklung
- 11: Isolator
- 12: Eisenkern
- 13: Motor
- 14: Mahleinheit

- 20: Elektromotor
- 21: Schenke
- 22: Getriebe
- 23: Getriebewelle

- 30: Elektromotor
- 31: Getriebewelle

## Patentansprüche

1. Kaffeemaschine für Haushaltszwecke mit einer motorisch angetriebenen Mahleinheit und/oder einer motorisch angetriebenen Brüheinheit, mit einem Elektromotor als Antrieb zumindest einer der beiden Einheiten, **gekennzeichnet durch** eine Transversalflussmaschine (TFM) als Elektromotor (13; 30).

2. Kaffeemaschine nach Anspruch 1, **gekennzeichnet durch** eine TFM mit einem stromgespeisten Erregersystem.

3. Kaffeemaschine nach Anspruch 1 oder 2, **gekennzeichnet durch** eine Transversalflussreluktanzmaschine (TFRM) als Elektromotor.

4. Kaffeemaschine nach einem der Ansprüche 1 bis 3, **gekennzeichnet durch** eine TFM oder eine TRFM als Synchronmaschine.

5. Kaffeemaschine nach einem der Ansprüche 1 bis 3, **gekennzeichnet durch** eine TFM oder eine TRFM als Asynchronmaschine.

6. Kaffeemaschine nach einem der Ansprüche 1 bis 5, **dadurch gekennzeichnet, dass** eine TFM oder eine TRFM die Mahleinheit (13) und/oder eine TFM oder eine TRFM die Brüheinheit antreibt.

7. Kaffeemaschine nach Anspruch 6 mit einer Mahleinheit (14) mit einer ersten, feststehenden Mahlscheibe (2) und einer zweiten, rotierenden Mahlscheibe (3), **gekennzeichnet durch** eine umfangsseitige und drehfeste Anordnung des Rotors (5) einer TFM oder TFRM an der rotierenden Mahlscheibe (3) und einer drehfesten Anordnung des mit dem Rotor (5) korrespondierenden Stators (6) der TFM oder TFRM an einem Gehäuse (1) der Mahleinheit (14).

8. Kaffeemaschine nach Anspruch 6 mit einer Spindelbrüheinheit mit einer angetriebenen Spindel, **gekennzeichnet durch** eine umfangsseitige und drehfeste Anordnung des Rotors einer TFM oder TFRM an der Spindel und einer drehfesten Anordnung des mit dem Rotor korrespondierenden zylindrischen Stators der TFM oder TFRM an einem Gehäuse der Spindelbrüheinheit.

9. Kaffeemaschine nach Anspruch 6 mit einer Spindelbrüheinheit mit einer angetriebenen Spindel, **gekennzeichnet durch** eine umfangsseitige und drehfeste Anordnung des Rotors einer TFM oder TFRM an der Spindel und einer gehäusefesten Anordnung des mit dem Rotor korrespondierenden Stators der TFM oder TFRM innerhalb des Rotors.

## Claims

1. Coffee machine for household purposes with a motor-driven grinding unit and/or a motor-driven brewing unit, with an electric motor as a drive of at least one of the two units, **characterised by** a transversal flow machine (TFM) as electric motor (13; 30).

2. Coffee machine according to claim 1, **characterised by** a TFM with a current-fed excitation system.

3. Coffee machine according to claim 1 or 2, **characterised by** a transversal flow reluctance machine (TFRM) as electric motor.

4. Coffee machine according to one of claims 1 to 3, **characterised by** a TFM or a TRFM as synchronous machine.

5. Coffee machine according to one of claims 1 to 3, **characterised by** a TFM or a TRFM as asynchronous machine.

6. Coffee machine according to one of claims 1 to 5, **characterised in that** a TFM or a TRFM drives the grinding unit (13), and/or a TFM or a TRFM drives the brewing unit.

7. Coffee machine according to claim 6 with a grinding unit (14) with a first, stationary grinding disc (2) and a second, rotating grinding disc (3), **characterised by** a circumferential and rotationally fixed arrangement of the rotor (5) of a TFM or TFRM on the rotating grinding disc (3) and a rotationally fixed arrangement of the stator (6), which corresponds to the rotor (5), of the TFM or TFRM on a housing (1) of the grinding unit (14).

8. Coffee machine according to claim 6 with a spindle brewing unit with a driven spindle, **characterised by** a circumferential and rotationally fixed arrangement of the rotor of a TFM or TFRM on the spindle and a rotationally fixed arrangement of the cylindrical stator, which corresponds to the rotor, of the TFM or TFRM on a housing of the spindle brewing unit.

9. Coffee machine according to claim 6 with a spindle brewing unit with a driven spindle, **characterised by** a circumferential and rotationally fixed arrangement of the rotor of a TFM or TFRM on the spindle and an arrangement, fixed in relation to the housing, of the stator, which corresponds to the rotor, of the TFM or TFRM within the rotor.

## Revendications

1. Machine à café à usage domestique comprenant une unité de broyage entraînée par moteur et/ou une unité de percolation entraînée par moteur, avec un moteur électrique destiné à entraîner au moins l'une des deux unités, **caractérisée par** une machine à flux transverse (TFM) en tant que moteur électrique (13 ; 30).

2. Machine à café selon la revendication 1, **caractérisée par** une TFM est avec un système d'excitation alimenté en courant.

3. Machine à café selon la revendication 1 ou 2, **caractérisée par** une machine à réluctance à flux transverse (TFRM) en tant que moteur électrique.

4. Machine à café selon l'une quelconque des revendications 1 à 3, **caractérisée par** une TFM ou une TFRM en tant que machine synchrone.

5. Machine à café selon l'une quelconque des revendications 1 à 3, **caractérisée par** une TFM ou une TFRM en tant que machine asynchrone.

6. Machine à café selon l'une quelconque des revendications 1 à 5, **caractérisée en ce qu'**une TFM ou une TFRM entraîne l'unité de broyage (13) et/ou **en ce qu'**une TFM ou une TFRM entraîne l'unité de percolation.

7. Machine à café selon la revendication 6, comprenant une unité de broyage (14) avec un premier disque broyeur fixe (2) et un second disque broyeur rotatif (3), **caractérisée par** une disposition de manière périphérique et solidaire en rotation du rotor (5) d'une TFM ou d'une TFRM sur le disque broyeur rotatif (3), et par une disposition de manière solidaire en rotation du stator (6) correspondant au rotor (5) de la TFM ou de la TFRM sur un boîtier (1) de l'unité de broyage (14).

8. Machine à café selon la revendication 6, comprenant une unité de percolation à broche avec une broche entraînée, **caractérisée par** une disposition de manière périphérique et solidaire en rotation du rotor d'une TFM ou TFRM sur la broche, et par une disposition de manière solidaire en rotation du stator cylindrique correspondant au rotor de la TFM ou de la TFRM sur un boîtier de l'unité de percolation à broche.

9. Machine à café selon la revendication 6, comprenant une unité de percolation à broche dotée d'une broche entraînée, **caractérisée par** une disposition de manière périphérique et solidaire en rotation du rotor d'une TFM ou d'une TFRM sur la broche, et par une disposition de manière fixe par rapport au boîtier à l'intérieur du rotor du stator correspondant au rotor de la TFM ou de la TFRM.
